(19) Europäisches Patentamt
European Patent Office
Office européen des brevets

(11) Veröffentlichungsnummer: **0 041 479**
**B1**

# (12) EUROPÄISCHE PATENTSCHRIFT

(45) Veröffentlichungstag der Patentschrift: **04.04.84**

(51) Int. Cl.³: **C 08 L 27/04**, C 08 K 5/34

(21) Anmeldenummer: **81810200.6**

(22) Anmeldetag: **26.05.81**

(54) **Mit Amino-thiouracilen stabilisierte chlorhaltige Thermoplasten.**

(30) Priorität: **02.06.80 CH 4261/80**

(43) Veröffentlichungstag der Anmeldung: **09.12.81 Patentblatt 81/49**

(45) Bekanntmachung des Hinweises auf die Patenterteilung: **04.04.84 Patentblatt 84/14**

(84) Benannte Vertragsstaaten: **BE CH DE FR GB IT LI NL**

(56) Entgegenhaltungen:
**DE - C - 888 167**
**US - A - 3 436 362**
**US - A - 4 105 627**

(73) Patentinhaber: **CIBA-GEIGY AG, Postfach, CH-4002 Basel (CH)**

(72) Erfinder: **Abeler, Gerd, Dr., Alter Wixhäuser Weg 61, D-6100 Darmstadt (DE)**

**EP 0 041 479 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Mit Amino-thiouracilen stabilisierte chlorhaltige Thermoplasten

Die vorliegende Erfindung betrifft neue stabilisierte chlorhaltige Thermoplasten, bzw. die Verwendung bestimmter Uracile zum Stabilisieren von solchen Substraten.

Uracile sind als PVC-Stabilisatoren aus der DE-AS 1 694 873 bekannt, so daß 1,3-Dimethyl-6-amino-uracil (Sp. 2, Z. 2/3). Auch ein Thiouracil, das 3-Phenyl-6-methyl-2-thiouracil, ist als PVC-Stabilisator bekannt aus der US-PS 4 105 627, Sp. 7, Z. 26. Schließlich offenbart die DE-PS 888 167 Pyrimidine, wie das 2,4-Diamino-6-oxy-pyrimidin als PVC Stabilisator.

Für die hohen Anforderungen der Praxis haben sich diese bekannten PVC-Stabilisatoren jedoch als nicht immer zufriedenstellend erwiesen. Ihre Wirksamkeit läßt zu wünschen übrig, ebenso ihre Verträglichkeit mit dem Substrat und auch ihre thermische und hydrolytische Stabilität. Schließlich ist auch ihr toxikologisches Verhalten zu bemängeln.

Aufgabe der Erfindung war es, Stabilisatoren zu schaffen, die diese Nachteile nicht oder aber in wesentlich geringerem Ausmaß besitzen.

Demgemäß betrifft die Erfindung thermoplastische Formmassen auf der Grundlage von Vinylchloridpolymeren, enthaltend 0,1 bis 5,0 Gewichtsprozent, eines 2-Thio-6-amino-uracils der Formel I

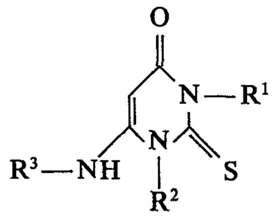

(I)

worin

$R^1$ und $R^2$ unabhängig voneinander ein Kohlenwasserstoffrest mit 1 bis 24 Kohlenstoffatomen sind, der durch $-OH$, $-COOR^4$, $-O(C{=}O)R^4$, $-(C{=}O)R^4$, Halogen oder Amino substituiert sein kann, und $R^3$ H, Acyl mit 2 bis 24 Kohlenstoffatomen, $C_6-C_{14}$ Aryl oder $-(C{=}O)NHR^4$ ist, wobei $R^4$ ein Kohlenwasserstoffrest mit 1 bis 24 Kohlenstoffatomen ist.

Ein Kohlenwasserstoffrest $R^1$ und/oder $R^2$ mit 1 bis 24 Kohlenwasserstoffatomen, der durch $-OH$, $-COOR^4$, $-O(C{=}O)R^4$, $-(C{=}O)R^4$, Halogen oder Amino substituiert sein kann, ist z. B. $C_{1-24}$ Alkyl, wie verzweigtes oder insbesondere geradkettiges Alkyl, insbesondere solches mit 1 bis 12 Kohlenstoffatomen, wie Methyl, Äthyl, n-Propyl, n-Butyl oder n-Octyl, oder auch $C_{2-24}$ Alkenyl, insbesondere $C_{2-12}$ Alkenyl, wie Vinyl oder Propen-1-yl, oder auch $C_{6-24}$ Aryl, wie Phenyl oder ($C_{1-12}$ Alkyl)-phenyl, wie Methylphenyl, Dimethylphenyl, Äthylphenyl oder i-Propylphenyl, oder auch $C_{7-24}$ Aralkyl, wie Benzyl, $\alpha,\alpha$-Dimethylbenzyl oder Methylbenzyl, z. B. 4-Methylbenzyl, oder auch $C_{1-24}$ Hydroxyalkyl, insbesondere $C_{2-12}$ Hydroxyalkyl, wie 2-Hydroxyäthyl, oder auch verestertes $C_{2-24}$ Carboxyalkyl, wie $C_{3-24}$ Alkoxycarbonylmethyl, z. B. Methoxycarbonylmethyl, n-Butoxycarbonylmethyl, n-Octoxycarbonylmethyl oder n-$C_{14}H_{29}$-oxycarbonylmethyl, oder auch $C_{2-24}$ Acyloxyalkyl, wobei Alkyl insbesondere Methylen oder 1,2-Äthylen ist, wie ($C_{1-12}$ Alkyl)-carbonyloxy-methyl oder 2-[($C_{1-12}$Alkyl)-carbonyloxy]-äthyl, z. B. Acetyloxymethyl, 2-Acetyloxy-äthyl, Propionyloxymethyl oder 2-Propionyloxyäthyl, oder auch $C_{3-24}$ Acylalkyl, wobei Alkyl insbesondere Methylen ist, wie ($C_{1-12}$Alkyl)-carbonylmethyl, z. B. Acetylmethyl oder Propionylmethyl, oder auch $C_{1-24}$ Halogenalkyl, wobei Halogen insbesondere Chlor ist, wie 2-Chloräthyl oder 2-Chlorpropyl, oder auch $C_{6-24}$ Halogenphenyl, wie Chlorphenyl, oder auch $C_{6-24}$ Aminophenyl, wie Aminophenyl selbst.

Acyl $R^3$ mit 2 bis 24 Kohlenstoffatomen ist z. B. $C_{2-24}$ Alkylcarbonyl, insbesondere $C_{2-18}$Alkylcarbonyl, wie Acetyl, Propionyl, Butyryl, n-Undecylcarbonyl oder n-Heptadecylcarbonyl, oder Acetoacetyl, $R_3$ als $C_6-C_{14}$Aryl ist z. B. gegebenenfalls mit $C_1-C_8$Alkyl substituiertes Phenyl und bevorzugt unsubstituiertes Phenyl.

$R^3$ als $-(C{=}O)NHR^4$, worin $R^4$ ein Kohlenwasserstoffrest mit 1 bis 24 Kohlenstoffatomen ist, ist z. B. ($C_{1-12}$ Alkyl)-aminocarbonyl, wie Methylaminocarbonyl, Äthylaminocarbonyl oder n-Propylaminocarbonyl.

Bevorzugt verwendet man solche Uracile der Formel I, worin $R^1$ und $R^2$ die angegebene Bedeutung haben und $R^3$ Wasserstoff ist.

Vor allem verwendet man solche Uracile der Formel I, worin $R^1$ und $R^2$ $C_{1-12}$ Alkyl sind und $R^3$ Wasserstoff ist, insbesondere die in den Beispielen genannten Verbindungen.

Die erfindungsgemäß verwendeten Uracile sind bekannt und können nach bekannten Verfahren hergestellt werden, z. B. wie in der US-PS 2 598 936 angegeben. Sollten einige von ihnen noch neu sein, so können diese in Analogie zu bekannten nach an sich bekannten Verfahren hergestellt werden, z. B. wie in der genannten US-PS angegeben.

Die erfindungsgemäß verwendeten Uracile eignen sich sehr gut zum Schutz von chlorhaltigen Thermoplasten gegen den Abbau durch Wärmeeinwirkung. Sie können einzeln oder untereinander

vermischt den zu stabilisierenden Thermoplasten vor der Verarbeitung in üblichen Einrichtungen einverleibt werden, und zwar in jeweiligen Mengen von 0,1 bis 5,0, bevorzugt 0,2 bis 1,5 Gewichtsprozent, bezogen auf die gesamte Zusammensetzung.

Als chlorhaltige Thermoplaste seien genannt: Polyvinylidenchlorid und bevorzugt Polymere aus oder auf der Grundlage von Vinylchlorid. Bevorzugt sind Suspensions- und Massepolymere und ausgewaschene, also emulgatorarme Emulsionspolymere. Beim Polyvinylchlorid kann es sich um weichmacherhaltiges oder um Hart-PVC handeln. Besonders bevorzugt ist die Verarbeitung nach dem Spritzguß-, Kalander- und Extrusionsverfahren, sowie die Herstellung von Plastisolen.

Als Comonomere für Thermoplaste auf der Grundlage von Vinylchlorid seien genannt: Vinylidenchlorid, Transdichloräthan, Äthylen, Propylen, Butylen, Maleinsäure, Acrylsäure, Fumarsäure oder Itaconsäure.

Vor, während oder nach der Zugabe des erfindungsgemäß verwendeten Stabilisators oder Stabilisatorgemisches können je nach Verwendungszweck der Formmasse weitere Zusätze einverleibt werden.

Als weitere Additive, mit denen zusammen die erfindungsgemäß verwendeten Stabilisatoren eingesetzt werden können, sind beispielsweise zu nennen:

Antioxydantien, wie 2,6-Dialkylphenole, Derivate von alkylierten Hydrochinonen, hydroxylierte Thiodiphenyläther, Alkyliden-bis-phenole, O-, N- und S-Benzylverbindungen, hydroxybenzylierte Malonester, Hydroxybenzyl-Aromaten, 2-Triazinverbindungen, Amide der $\beta$-(3,5-Di-tert.-butyl-4-hydroxyphenyl)-propionsäure, Ester der $\beta$-(3,5-Di-tert.-butyl-4-hydroxyphenyl)-propionsäure, Ester der $\beta$-(5-tert.-Butyl-4-hydroxy-3-methylphenyl)-propionsäure, Ester der 3,5-Di-tert.-butyl-4-hydroxyphenylessigsäure, Acylaminophenole, Benzylphosphonate, Aminoarylderivate, UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze, wie z. B. Weichmacher, Gleitmittel, Emulgatoren, Füllstoffe, Ruß, Asbest, Kaolin, Talk, Glasfasern, Pigmente, optische Aufheller, Flammschutzmittel, Antistatica.

Beispiel für weitere Additive, mit denen zusammen die erfindungsgemäß verwendeten Stabilisatoren eingesetzt werden können, finden sich in der DE-OS 2 427 853 auf Seiten 18 bis 24.

Bevorzugte Costabilisatoren sind Ca/Zn-Carboxylate, Organozinnstabilisatoren und Epoxide.

Die nachfolgenden Beispiele dienen der näheren Erläuterung der Erfindung. Teile sind dabei Gewichtsteile und Prozente, Gewichtsprozente.

## Beispiel 1

Ein Dryblend, bestehend aus 100 Teilen S-PVC (K-Wert 64), 20 Teilen Dioctylphthalat, 3 Teilen epoxidiertes Sojabohnenöl (REOPLAST 39®), und 0,5 Teilen Phenyldidecylphosphit (IRGASTAB CH 300®) sowie 1,5 Teilen der erfindungsgemäßen Verbindung 1,3-Di-n-butyl-2-thio-6-amino-uracil (Verbindung 1) wird auf einem Mischwalzwerk 5 Minuten bei 170°C gewalzt und danach Folienstücke von 0,3 mm Dicke entnommen. Diese werden in einem Testofen bei 180°C thermisch belastet. Alle 15 Minuten wird eine Probe entnommen und der Vergilbungsgrad (Yellowness Index) nach ASTM D 1925/70 bestimmt. Die Ergebnisse zeigt Tabelle 1.

Mit veränderter Rezeptur (Tabelle 2) wird das Verfahren wiederholt:

Dryblend, bestehend aus 100 Teilen S-PVC (K-Wert 64), 2 Teilen epoxidiertes Sojabohnenöl (REOPLAST 39®), 0,5 Teilen Trinonylphenylphosphit, 1,0 Teilen Calcium/Zink-Stearat und 0,8 Teilen der erfindungsgemäßen Verbindung 1.

Verwendet man in diesen Versuchen anstelle von 1,3-Di-n-butyl-2-thio-6-amino-uracil eine der folgenden Verbindungen:

1,3-Dimethyl-2-thio-6-amino-uracil,
1,3-Diäthyl-2-thio-6-amino-uracil,
1,3-Di-n-octyl-2-thio-6-amino-uracil oder
1-Methyl-3-n-butyl-2-thio-6-amino-uracil,

so erhält man vergleichbare Resultate.

Tabelle 1

Hitzetest:
statisch/dynamisch, Walztemperatur 170°C, Walzdauer 5 min, Ofentemperatur 180°C
Folienstärke 0,3 mm

Grundrezeptur:
S-PVC (K-Wert 64) 100 T, Dioctylphthalat 20 T, epoxidiertes Sojaöl 3,0 T,
Phenyldidecylphosphi 0,5 T

| Test-Nr. | Testsubstanzen | Einsatzmenge pph | Vergilbung (YI n. ASTM D 1925-70) u. Belastungszeit (min) | | | | | |
|---|---|---|---|---|---|---|---|---|
| | | | 0 | 15 | 30 | 45 | 60 | 75 |
| 1 | – | – | 10 | 83 | >100 | | | |
| 2 | Verbindung 1 | 1,5 | 3 | 5 | 10 | 25 | 40 | 51 |

Tabelle 2

Hitzetest:
statisch/dynamisch, Walztemperatur 170°C, Walzdauer 5 min, Ofentemperatur 180°C
Folienstärke 0,3 mm

Grundrezeptur:
S-PVC (K-Wert 64) 100 T, epoxidiertes Sojaöl 2,0 T, Trinonylphenylphosphit 0,5 T,
Ca/Zn-Stearat 1,0 T

| Test-Nr. | Testsubstanzen | Einsatzmenge pph | Vergilbung (YI n. ASTM D 1925-70) u. Belastungszeit (min) | | | |
|---|---|---|---|---|---|---|
| | | | 0 | 15 | 30 | 45 |
| 1 | – | – | 44 | 86 | >100 | |
| 2 | Verbindung 1 | 0,8 | 3 | 7 | 33 | >100 |

**Patentansprüche**

1. Thermoplastische Formmassen auf der Grundlage von Vinylchloridpolymeren, enthaltend 0,1 bis 5,0 Gewichtsprozent eines 2-Thio-6-amino-uracils der Formel I

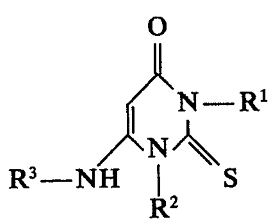

(I)

worin
$R^1$ und $R^2$ unabhängig voneinander ein Kohlenwasserstoffrest mit 1 bis 24 Kohlenstoffatomen sind, der durch $-OH$, $-COOR^4$, $-O(C=O)R^4$, $-(C=O)R^4$, Halogen oder Amino substituiert sein kann, und $R^3$ H, Acyl mit 2 bis 24 Kohlenstoffatomen, $C_6-C_{14}$Aryl, oder $-(C=O)NHR^4$ ist, wobei $R^4$ ein Kohlenwasserstoffrest mit 1 bis 24 Kohlenstoffatomen ist.

2. Formmasse nach Anspruch 1, worin $R^1$ und $R^2$ die in Anspruch 1 angegebene Bedeutung haben und $R^3$ Wasserstoff ist.

3. Formmasse nach Anspruch 1, worin $R^1$ und $R^2$ $C_{1-12}$ Alkyl sind und $R^3$ Wasserstoff ist.

4. Formmasse nach Anspruch 1, enthaltend 1,3-Di-n-butyl-2-thio-6-aminouracil.

5. Stabilisierte Formmasse gemäß Anspruch 1, dadurch gekennzeichnet, daß sie zusätzlich mindestens einen weiteren Stabilisator enthält.

6. Stabilisierte Formmasse gemäß Anspruch 5, dadurch gekennzeichnet, daß ein zusätzlicher Stabilisator, ein Ca/Zn-Carboxylat ist.

7. Verwendung von Uracilen gemäß Anspruch 1 zum Stabilisieren von chlorhaltigen thermoplastischen Polymeren.

**Claims**

1. A thermoplastic moulding composition based on a polymer of vinyl chloride, said composition containing 0.1 to 5% by weight of a 2-Thio-6-aminouracil of the formula I

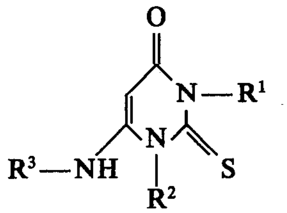

(I)

wherein each of $R^1$ and $R^2$ independently is a hydrocarbon radical of 1 to 24 carbon atoms which can be substituted by $-OH$, $-COOR^4$, $-O(C=O)R^4$, $-(C=O)R^4$, halogen or amino, and $R^3$ is hydrogen, acyl of 2 to 24 carbon atoms or $-(C=O)NHR^4$, whilst $R^4$ is a hydrocarbon radical of 1 to 24 carbon atoms.

2. A moulding composition according to claim 1, wherein $R^1$ and $R^2$ are as defined in claim 1 and $R^3$ is hydrogen.

3. A moulding composition according to claim 1, wherein $R^1$ and $R^2$ are $C_1-C_{12}$alkyl and $R^3$ is hydrogen.

4. A moulding composition according to claim 1, which contains 1,3-di-n-butyl-2-thio-6-aminouracil.

5. A stabilised moulding composition according to claim 1, which additionally contains at least one further stabiliser.

6. A stabilised moulding composition according to claim 5, wherein an additional stabiliser is a calcium/zinc carboxylate.

7. Use of a uracil according to claim 1 for stabilising chlorinated thermoplastic polymers.

**Revendications**

1. Matières à mouler thermoplastique à base de polymères du chlorure de vinyle matières qui renferment de 0,1 à 5,0% en poids d'un thio-2 amino-6 uracile répondant à la formule I

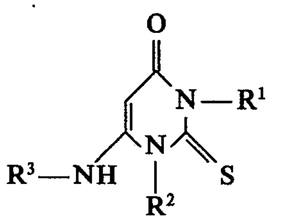

(I)

dans laquelle

$R^1$ et $R^2$ représentent chacun, indépendamment l'un de l'autre, un radical hydrocarboné contenant de 1 à 24 atomes de carbone, éventuellement porteur d'un radical $-OH$, $-COOR^4$, $-O(C=O)R^4$ ou $-(C=O)R^4$, d'un halogène ou d'un groupe amino, et

$R^3$ représente un atome d'hydrogène, un acyle en $C_2-C_{24}$, un aryle en $C_6-C_{14}$ ou un radical $-(C=O)NHR^4$,

le symbole $R^4$ désignant un atome d'hydrogène contenant de 1 à 24 atomes de carbone.

2. Matière à mouler selon la revendication 1, caractérisée en ce que $R^1$ et $R^2$ ont les significations données à la revendication 1 et $R^3$ représente l'hydrogène.

3. Matière à mouler selon la revendication 1, caractérisée en ce que $R^1$ et $R^2$ représentent chacun un alkyle en $C_1-C_{12}$ et $R^3$ représente l'hydrogène.

4. Matière à mouler selon la revendication 1, qui contient du di-n-butyl-1,3 thio-2 amino-6 uracile.

5. Matière à mouler stabilisée selon la revendication 1, caractérisée en ce qu'elle contient en outre au moins un stabilisant supplémentaire.

6. Matière à mouler stabilisée selon la revendication 5, caractérisée en ce qu'elle contient, comme stabilisant supplémentaire, un carboxylate de Ca/Zn.

7. Application d'uraciles selon la revendication 1 à la stabilisation de polymères thermoplastiques contenant du chlore.